# EUROPEAN PATENT APPLICATION

(11) **EP 2 660 913 A1**
(43) Date of publication of application: **06.11.2013**
(21) Application number: 11853311.6
(22) Date of filing: 22.12.2011
(51) Int. Cl.: H01M 8/04, H01M 8/06, H01M 8/10, H01M 8/12

(54) **FUEL CELL SYSTEM**

(30) Priority: 28.12.2010 JP 2010292678
(71) Applicant: JX Nippon Oil & Energy Corporation, Chiyoda-ku Tokyo 100-8162 (JP)
(72) Inventor: TSUKAGOSHI Shouichi, Tokyo 100-8162 (JP); MIZUNO Yasushi, Tokyo 100-8162 (JP)
(74) Representative: Grünecker, Kinkeldey, Stockmair & Schwanhäusser
(86) International application number: PCT/JP2011/079858
(87) International publication number: WO 2012/090871

(57) **Abstract**

A fuel cell system includes: a hydrogen generating unit that generates hydrogen-containing gas using hydrogen-containing fuel; a cell stack that performs power generation using the hydrogen-containing gas; a current acquiring unit that acquires an electric current of the power generation in the cell stack; a power generation state determination value acquiring unit that acquires a power generation state determination value based on measurement results of a power generation parameter of the power generation in the cell stack; an estimate value acquiring unit that acquires an estimated value of the power generation parameter that is predetermined for the electric current; a comparing unit that compares the power generation state determination value and the estimated value; and a supply amount adjusting unit that adjusts a supply amount of the hydrogen-containing fuel based on an increase or a decrease of the power generation state determination value in relation to the estimated value.

## Description

### Technical Field

The present invention relates to a fuel cell system.

### Background Art

Hydrogen-containing fuel used in a fuel cell system may change in its properties (such as a composition or a calorific value). As a fuel cell system for dealing with the change in the properties of hydrogen-containing fuel, fuel cell systems disclosed in Patent Literature 1 and 2, for example, are conventionally known. The fuel cell system disclosed in Patent Literature 1 includes fuel property measuring means for measuring the properties and flow rate of hydrogen-containing fuel, fuel cell state determination means for determining the state of a fuel cell, output control means for controlling the output of the fuel cell, and fuel cell operation control means for calculating and outputting an optimum control parameter. This fuel cell system controls any one of a vapor supply amount, a fuel supply amount, an oxidant supply amount, a fuel utilization rate, an oxidant utilization rate, a current density, an output voltage, and an output current according to a change in the properties of the hydrogen-containing fuel to thereby maintain a heat independent operation state.

In the fuel cell system disclosed in Patent Literature 2, an area server is provided in each of a plurality of fuel cells. A central server sets and transmits control parameters of fuel cell systems to the area servers. Each fuel cell system performs an operation based on the control parameter transmitted to the area server. The control parameter changes the flow rate of fuel, vapor, air, or the like based on the properties of hydrogen-containing fuel.

### Citation List

### Patent Literature

Patent Literature 1: Japanese Patent Application Laid-open No. 2006-49056
Patent Literature 2: Japanese Patent Application Laid-open No. 2003-282116

However, since the fuel cell system disclosed in Patent Literature 1 requires a sensor for measuring the properties of hydrogen-containing fuel, there is a problem in that the cost of installation and maintenance increases. In the fuel cell system disclosed in Patent Literature 2, the number of control parameters to be managed for each manufacturer and model of the fuel cell system increases. Thus, there is a problem in that the cost for data management increases significantly. Moreover, there is a possibility that, when a trouble occurs in a communication network, a problem occurs in the operation of the fuel cell system. Further, there is another possibility that, when the properties of hydrogen-containing fuel are different from one fuel cell system to another fuel cell system in a group of fuel cell systems managed by the area servers, a problem may occur in the operation. Thus, there is a demand for a fuel cell system capable of dealing with a change in the properties of hydrogen-containing fuel without using any special measurement device and a communication network.

### Summary of Invention

### Technical Problem

The present invention has been made to solve the above-described problems, and an object of the present invention is to provide a fuel cell system capable of performing an appropriate operation according to a change in properties of hydrogen-containing fuel without using any special device.

### Solution to Problem

According to a first aspect of the present invention, there is provided a fuel cell system including: a hydrogen generating unit that generates hydrogen-containing gas using hydrogen-containing fuel; a cell stack that performs power generation using the hydrogen-containing gas; a current acquiring unit that acquires an electric current of the power generation in the cell stack; a power generation state determination value acquiring unit that acquires a power generation state determination value based on measurement results of a power generation parameter of the power generation in the cell stack; an estimate value acquiring unit that acquires an estimated value of the power generation parameter that is predetermined for the electric current; a comparing unit that compares the power generation state determination value and the estimated value; and a supply amount adjusting unit that adjusts a supply amount of the hydrogen-containing fuel based on an increase or a decrease of the power generation state determination value in relation to the estimated value.

This fuel cell system compares the power generation state determination value and the estimated value and adjusts the supply amount of the hydrogen-containing fuel based on an increase or a decrease in the power generation state determination value in relation to the estimated value. The power generation parameter is affected by a power generation state in the cell stack within the fuel cell system. Thus, if other conditions are constant, the change in the power generation state determination value based on the measurement results of the power generation parameter indicates a change in the properties of the hydrogen-containing fuel used in the power generation. The estimated value of the power generation parameter is a value that is predetermined for the electric current and can be used as base data for determining a change in the properties. When an electric current and a power generation state determination value are acquired at a predetermined point in time during the operation of the fuel cell system, the estimate value acquiring unit can specify the estimated value based on the electric current and the comparing unit can compare the estimated value and the power generation state determination value. When the power generation state determination value has not changed from the estimated value serving as the base data, it can be determined that there is no change in the properties. On the other hand, when the power generation state determination value has increased or decreased from the estimated value, it can be determined that there is a change in the properties. In this case, the supply amount adjusting unit adjusts the supply amount of the hydrogen-containing fuel, whereby the operation state of the fuel cell system can approach the state before the properties have changed. By using the power generation parameter that can be measured by the sensors and devices arranged in a general fuel cell system that does not consider a change in the properties of hydrogen-containing fuel, the fuel cell system can deal with the change in the properties without using any special device. In this manner, the fuel cell system can perform an appropriate operation according to a change in the properties of the hydrogen-containing fuel without using any specific device.

The fuel cell system may further include a first determining unit that determines whether a state where a variation of the power generation state determination value is larger than a predetermined threshold value has continued for a predetermined period; and a first system interrupting unit that interrupts the system when the first determining unit determines that the state where the variation is larger than the threshold value has continued for the predetermined period. When the power generation state determination value changes greatly more than the extent that is considered to be caused by the influence of the change in the properties of the hydrogen-containing fuel, and the state has continued for a predetermined period, it can be determined that there is an abnormality in the supply of the hydrogen-containing fuel. In this case, the first system interrupting unit can interrupt the system.

The fuel cell system may further include a second determining unit that determines whether a variation of the power generation state determination value in relation to the estimated value is larger than a predetermined threshold value; and a second system interrupting unit that interrupts the system when the second determining unit determines that the variation is larger than the threshold value. When the power generation state determination value has changed greatly from the estimated value more than the extent that is considered to be caused by the influence of the change in the properties of the hydrogen-containing fuel, it is possible to immediately determine that there is an abnormality in the supply of the hydrogen-containing fuel. In this case, the second system interrupting unit can interrupt the system.

For example, the power generation parameter is a stack voltage of the cell stack. The stack voltage for a certain electric current changes according to a composition of the hydrogen-containing fuel. Moreover, since the cell stack generates electric power directly using the hydrogen-containing gas from the hydrogen-containing fuel, the stack voltage changes rapidly according to a change in the composition. Thus, by using the stack voltage as the power generation parameter, the fuel cell system can perform highly responsive control with respect to a change in the properties of the hydrogen-containing fuel.

For example, the power generation parameter is an AC power based on the power generation in the cell stack. The AC power shows high responsiveness with respect to a change in the properties of the hydrogen-containing fuel similarly to the stack voltage. Further, the fuel cell system may suppress the influence of calorific value deficiency using a heater or the like when the calorific value of the hydrogen-containing fuel is not sufficient. In such a case, even if the influence on a voltage is small, the loss of auxiliary devices due to the calorific value deficiency increases. Thus, even if the influence on a voltage is small, it is possible to deal with a change in the properties of the hydrogen-containing fuel by using an AC power as the power generation parameter. Therefore, by using the AC power as the power generation parameter, the fuel cell system can perform highly responsive control with respect to a change in the properties of the hydrogen-containing fuel.

For example, the power generation parameter is an off-gas combustion temperature at which an off-gas from the cell stack has been combusted. The off-gas combustion temperature is affected by the calorific value of the hydrogen-containing fuel and thus has high responsiveness with respect to a change in the properties of the hydrogen-containing fuel. Thus, by using the off-gas combustion temperature as the power generation parameter, the fuel cell system can perform highly responsive control with respect to a change in the properties of the hydrogen-containing fuel.

For example, the power generation parameter is a stack temperature of the cell stack. The stack temperature has a low ability to track a minute change in the calorific value of the hydrogen-containing fuel. That is, the stack temperature can be regarded as a parameter that averages the change in the calorific value of the hydrogen-containing fuel. Thus, by using the stack temperature as the power generation parameter, the fuel cell system can deal with a change in the properties of the hydrogen-containing fuel without averaging the measurement results.

For example, the power generation parameter is an exhaust heat recovery calorific value which is an amount of recovered exhaust heat in the system. The exhaust heat recovery calorific value is affected by the calorific value of the hydrogen-containing fuel and thus changes according to the change in the properties. For example, under a high ambient temperature environment, both temperatures of a heat medium before heat recovery and a heat medium after heat recovery increase. Moreover, under a low ambient temperature environment, both temperatures of the heat medium before heat recovery and the heat medium after heat recovery decrease. Alternatively, when the temperature of the heat medium after heat recovery is controlled by the system so as to be constant, under a high ambient temperature environment, the temperature of the heat medium before heat recovery increases and the heat medium flow rate increases. Moreover, in a low ambient temperature environment, the temperature of the heat medium before heat recovery decreases and the heat medium flow rate decreases. Thus, the exhaust heat recovery calorific value based on a difference between the calorific values of the heat medium before and after heat recovery is rarely affected by the ambient temperature. Thus, by using the exhaust heat recovery calorific value as the power generation parameter, the fuel cell system can deal with a change in the properties of the hydrogen-containing fuel without being affected by the ambient temperature.

For example, the power generation parameter is an inlet temperature of an exhaust heat recovery unit that recovers exhaust heat in the system. The exhaust heat recovery unit is affected by the calorific value of the hydrogen-containing fuel and thus changes according to a change in the properties. Here, the fuel cell system may have a combustion catalyst as a countermeasure to incomplete combustion of the off-gas due to misfiring or the like in the off-gas combusting unit. In this case, even if the off-gas combusting unit misfires, the calorific value of the hydrogen-containing fuel is reflected on the calorific value of the exhaust gas due to the combustion catalyst. Thus, by using the inlet temperature of the exhaust heat recovery unit as the power generation parameter, the fuel cell system can deal with the change in the properties of the hydrogen-containing fuel even when the off-gas combusting unit misfires.

### Advantageous Effects of Invention

According to the present invention, it is possible to perform an appropriate operation according to a change in properties of hydrogen-containing fuel without using any special device.

### Brief Description of Drawings

Fig. 1 is a block diagram showing a configuration of a fuel cell system according to a first embodiment of the present invention.
Fig. 2 is a block diagram showing a configuration of a control unit.
Fig. 3 is a schematic diagram showing a configuration around an exhaust heat recovery unit.
Fig. 4 is an example of a map showing estimated values for power generation parameters.
Fig. 5 is a flowchart showing a control process of the fuel cell system according to the first embodiment.
Fig. 6 is a flowchart showing a control process of a fuel cell system according to a second embodiment.
Fig. 7 is a flowchart showing a control process of a fuel cell system according to a third embodiment.

### Description of Embodiments

Hereinafter, preferred embodiments of the present invention will be described in detail with reference to the drawings. In the drawings, the same or corresponding portions will be denoted by the same reference numerals and redundant description thereof will not be provided.

### [First Embodiment]

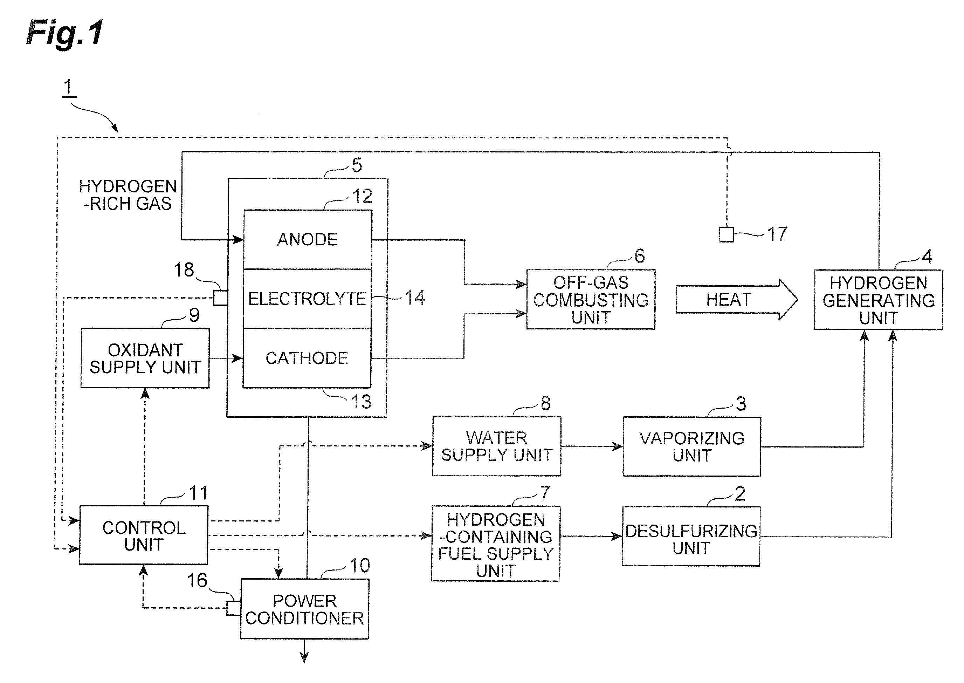

As shown in Fig. 1, a fuel cell system 1 includes a desulfurizing unit 2, a vaporizing unit 3, a hydrogen generating unit 4, a cell stack 5, an off-gas combusting unit 6, a hydrogen-containing fuel supply unit 7, a water supply unit 8, an oxidant supply unit 9, a power conditioner 10, and a control unit 11. In the fuel cell system 1, the cell stack 5 performs power generation using hydrogen-containing fuel and oxidant. The type of the cell stack 5 in the fuel cell system 1 is not particularly limited, and for example, a polymer electrolyte fuel cell (PEFC), a solid oxide fuel cell (SOFC), a phosphoric acid fuel cell (PAFC), a molten carbonate fuel cell (MCFC), and other types of fuel cells can be used. The constituent components shown in Fig. 1 may be appropriately omitted depending on the type of the cell stack 5, the type of hydrogen-containing fuel, a reforming method, and the like.

As the hydrogen-containing fuel, hydrocarbon-based fuel is used, for example. As the hydrocarbon-based fuel, compounds containing carbon and hydrogen (the compounds may contain other elements such as oxygen) in their molecules and mixtures thereof are used. Examples of the hydrocarbon-based fuel include hydrocarbons, alcohols, ethers, and biofuel, and hydrocarbon-based fuels that originate from existing fossil fuels such as petroleum or coal, that originate from synthetic fuels such as synthetic gas, and that originate from biomass can be appropriately used. Specifically, examples of hydrocarbons include methane, ethane, propane, butane, natural gas, liquefied petroleum gas (LPG), city gas, town gas, gasoline, naphtha, kerosene, and gas oil. Examples of alcohols include methanol and ethanol. Examples of ethers include dimethyl ether. Examples of biofuel include biogas, bioethanol, biodiesel, and bio jet.

As the oxidant, air, pure oxygen gas (may contain impurities that are rarely removed by a general removal method), and oxygen-enriched air are used.

The desulfurizing unit 2 desulfurizes the hydrogen-containing fuel supplied to the hydrogen generating unit 4. The desulfurizing unit 2 has a desulfurizing catalyst for removing sulfurated compounds contained in the hydrogen-containing fuel. As a desulfurization method of the desulfurizing unit 2, an adsorptive desulfurization method of adsorbing and removing sulfurated compounds and a hydrodesulfurization method of allowing sulfurated compounds to react with hydrogen to remove the sulfurated compounds are used, for example. The desulfurizing unit 2 supplies the desulfurized hydrogen-containing fuel to the hydrogen generating unit 4.

The vaporizing unit 3 generates steam supplied to the hydrogen generating unit 4 by heating and vaporizing water. When water is heated by the vaporizing unit 3, heat generated within the fuel cell system 1 such as heat of the hydrogen generating unit 4, heat of the off-gas combusting unit 6, or heat recovered from exhaust gas may be used. Moreover, water may be heated using additional heat sources such as a heater or a burner. Although only the heat supplied from the off-gas combusting unit 6 to the hydrogen generating unit 4 is illustrated as an example in Fig. 1, the present invention is not limited to this. The vaporizing unit 3 supplies the generated steam to the hydrogen generating unit 4.

The hydrogen generating unit 4 generates hydrogen-rich gas using the hydrogen-containing fuel from the desulfurizing unit 2. The hydrogen generating unit 4 has a reformer that reforms the hydrogen-containing fuel using a reforming catalyst. A reforming method used in the hydrogen generating unit 4 is not particularly limited, and for example, steam reforming, partial oxidation reforming, autothermal reforming, and other reforming methods can be used. The hydrogen generating unit 4 may include a configuration for adjusting properties in addition to the reformer that reforms the hydrogen-containing fuel using the reforming catalyst depending on the properties of the hydrogen-rich gas required for the cell stack 5. For example, when the type of the cell stack 5 is a polymer electrolyte fuel cell (PEFC) or a phosphoric acid fuel cell (PAFC), the hydrogen generating unit 4 includes a configuration (for example, a shift reactor and a selective oxidation reactor) for removing carbon monoxides in the hydrogen-rich gas. The hydrogen generating unit 4 supplies the hydrogen-rich gas to an anode 12 of the cell stack 5.

The cell stack 5 performs power generation using the hydrogen-rich gas from the hydrogen generating unit 4 and the oxidant from the oxidant supply unit 9. The cell stack 5 includes the anode 12 to which the hydrogen-rich gas is supplied, a cathode 13 to which the oxidant is supplied, and an electrolyte 14 disposed between the anode 12 and the cathode 13. The cell stack 5 supplies electric power to the outside via the power conditioner 10. The cell stack 5 supplies hydrogen-rich gas and oxidant that were not used for power generation to the off-gas combusting unit 6 as off-gas. A combusting unit (for example, a combustor or the like that heats the reformer) included in the hydrogen generating unit 4 may be used as the off-gas combusting unit 6.

The off-gas combusting unit 6 combusts the off-gas supplied from the cell stack 5. The heat generated by the off-gas combusting unit 6 is supplied to the hydrogen generating unit 4 and is used for generation of the hydrogen-rich gas in the hydrogen generating unit 4.

The hydrogen-containing fuel supply unit 7 supplies the hydrogen-containing fuel to the desulfurizing unit 2. The water supply unit 8 supplies water to the vaporizing unit 3. The oxidant supply unit 9 supplies the oxidant to the cathode 13 of the cell stack 5. The hydrogen-containing fuel supply unit 7, the water supply unit 8, and the oxidant supply unit 9 are configured as a pump, for example, and are driven based on a control signal from the control unit 11.

The power conditioner 10 adjusts the electric power from the cell stack 5 according to a power consumption state on the outside. The power conditioner 10 performs a process of converting a voltage and a process of converting a DC power into an AC power, for example.

The control unit 11 performs a process of controlling the entire fuel cell system 1. The control unit 11 is configured as a device that includes a central processing unit (CPU), a read only memory (ROM), a random access memory (RAM), and an input/output interface. The control unit 11 is electrically connected to the hydrogen-containing fuel supply unit 7, the water supply unit 8, the oxidant supply unit 9, the power conditioner 10, and other sensors and auxiliary devices (not shown). The control unit 11 acquires various signals generated within the fuel cell system 1 and outputs a control signal to respective devices in the fuel cell system 1.

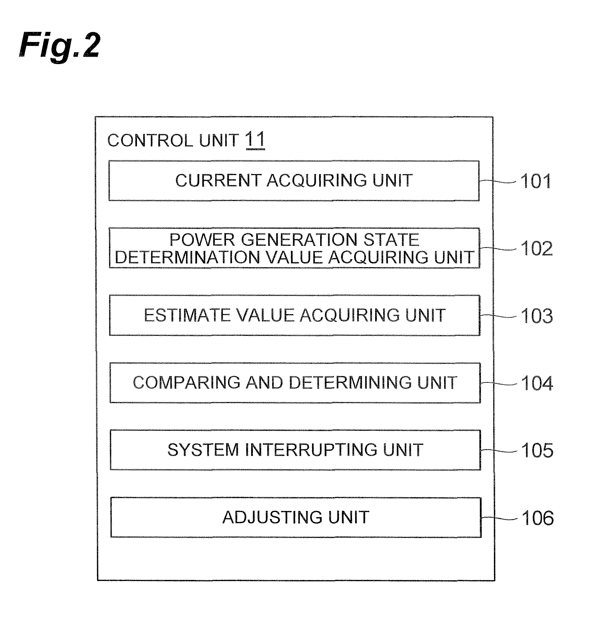

The fuel cell system 1 according to the present embodiment can perform an appropriate operation according to a change in the properties of the hydrogen-containing fuel. The control unit 11 can perform an appropriate control process according to a change in the properties of the hydrogen-containing fuel. As shown in Fig. 2, the control unit 11 includes a current acquiring unit 101, a power generation state determination value acquiring unit 102, an estimate value acquiring unit 103, a comparing and determining unit (a comparing unit, a first determining unit, and a second determining unit) 104, a system interrupting unit (first and second system interrupting units) 105, and an adjusting unit (supply amount adjusting unit) 106.

The current acquiring unit 101 of the control unit 11 has a function of acquiring an electric current of the power generation in the cell stack 5. The current acquiring unit 101 of the control unit 11 acquires an electric current by measuring a sweeping current in the power generation in the cell stack 5. The current acquiring unit 101 of the control unit 11 measures the sweeping current based on the measurement results by a measuring unit 16 of the power conditioner 10. The power generation state determination value acquiring unit 102 of the control unit 11 has a function of acquiring a power generation state determination value based on the measurement results of a power generation parameter of the power generation in the cell stack 5. The power generation state determination value acquiring unit 102 of the control unit 11 receives detection signals from sensors and meters arranged at measurement points within the fuel cell system 1. The power generation state determination value acquiring unit 102 of the control unit 11 acquires a power generation state determination value based on the received detection signals.

The power generation parameter value changes according to a power generation state of the cell stack 5. The power generation state of the cell stack 5 is affected by the composition and calorific value (that is, properties) of the hydrogen-containing fuel. Thus, if other conditions are constant, the change in the power generation parameter value indicates a change in the properties of the hydrogen-containing fuel. The power generation parameter that can be measured by a range of sensors and devices arranged in a general fuel cell system that does not consider a change in the properties of hydrogen-containing fuel is preferably used.

The power generation state determination value is a value that is obtained based on the measurement results of the power generation parameter. The power generation state determination value is a value that can determine the power generation state of the cell stack 5 by comparing the power generation state determination value with an estimated value that is predetermined for the power generation parameter. The measured value itself of the power generation parameter may be used as the power generation state determination value, an average value of the measured values may be used as the power generation state determination value, and a value obtained by arithmetically processing the measured values so as to facilitate the comparison may be used as the power generation state determination value.

Specifically, a stack voltage of the cell stack 5 can be used as the power generation parameter. The control unit 11 can acquire a stack voltage based on the detection results by the measuring unit 16 of the power conditioner 10. The stack voltage for a certain sweeping current changes according to a composition of the hydrogen-containing fuel. Moreover, since the cell stack 5 generates electric power directly using the hydrogen-rich gas from the hydrogen-containing fuel, the stack voltage changes rapidly according to a change in the composition. Thus, by using the stack voltage as the power generation parameter, the control unit 11 can perform highly responsive control with respect to a change in the properties of the hydrogen-containing fuel.

Moreover, an AC power based on the power generation in the cell stack 5 can be used as the power generation parameter. The control unit 11 can acquire an AC power based on the detection results by the measuring unit 16 of the power conditioner 10. The AC power shows high responsiveness with respect to a change in the properties of the hydrogen-containing fuel similarly to the stack voltage. Further, the fuel cell system 1 may suppress the influence of calorific value deficiency using a heater or the like when the calorific value of the hydrogen-containing fuel is not sufficient. In such a case, even if the influence on a voltage is small, the loss of auxiliary devices due to the calorific value deficiency increases. Thus, even if the influence on a voltage is small, it is possible to deal with a change in the properties of the hydrogen-containing fuel by using an AC power as the power generation parameter. Therefore, by using the AC power as the power generation parameter, the control unit 11 can perform highly responsive control with respect to a change in the properties of the hydrogen-containing fuel.

Moreover, an off-gas combustion temperature can be used as the power generation parameter. The control unit 11 can acquire an off-gas combustion temperature based on the detection results by a temperature sensor 17 that measures a combustion temperature of the off-gas combusting unit 6. The off-gas combustion temperature is affected by the calorific value of the hydrogen-containing fuel and thus has high responsiveness with respect to a change in the properties of the hydrogen-containing fuel. Thus, by using the off-gas combustion temperature as the power generation parameter, the control unit 11 can perform highly responsive control with respect to a change in the properties of the hydrogen-containing fuel.

Moreover, a stack temperature of the cell stack 5 can be used as the power generation parameter. The control unit 11 can acquire the stack temperature based on the detection results by a temperature sensor 18 that measures the stack temperature of the cell stack 5. The stack temperature has a low ability to track a minute change in the calorific value of the hydrogen-containing fuel. That is, the stack temperature can be regarded as a parameter that averages the change in the calorific value of the hydrogen-containing fuel. Thus, by using the stack temperature as the power generation parameter, the control unit 11 can deal with a change in the properties of the hydrogen-containing fuel without averaging the measurement results.

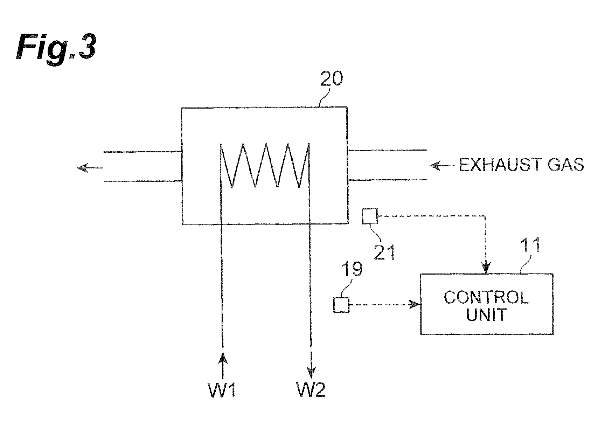

Moreover, an exhaust heat recovery calorific value which is a recovered amount of the exhaust heat in the system can be used as the power generation parameter. As shown in Fig. 3, the control unit 11 can acquire the exhaust heat recovery amount based on the detection results by the measuring unit 19 that measures the exhaust heat recovery calorific value. The measuring unit 19 can measure the exhaust heat recovery amount based on the flow rate and temperature of a heat medium with respect to the exhaust heat recovery unit 20. The exhaust heat recovery unit 20 recovers the heat of exhaust gas with an introduced heat medium W1 and supplies a heated heat medium W2 to a heat utilizing unit (not shown). The exhaust heat recovery calorific value is affected by the calorific value of the hydrogen-containing fuel and thus changes according to the change in the properties. Further, for example, under a high ambient temperature environment, both temperatures of the heat medium W1 before heat recovery and the heat medium W2 after heat recovery increase. Moreover, under a low ambient temperature environment, both temperatures of the heat medium W1 before heat recovery and the heat medium W2 after heat recovery decrease. Furthermore, when the temperature of the heat medium W2 after heat recovery is controlled by the system, a flow rate F of the heat medium changes instead of the temperature. In this case, for example, under a high ambient temperature environment, the temperature of the heat medium W1 before heat recovery increases, and the heat medium flow rate F increases. Moreover, under a low ambient temperature environment, the temperature of the heat medium W1 before heat recovery decreases, and the heat medium flow rate F decreases. Thus, the exhaust heat recovery calorific value based on a difference between the calorific values of the heat medium W1 and W2 is rarely affected by the ambient temperature. Thus, by using the exhaust heat recovery calorific value as the power generation parameter, the control unit 11 can deal with a change in the properties of the hydrogen-containing fuel without being affected by the ambient temperature.

Moreover, an inlet temperature of the exhaust heat recovery unit 20 that recovers the exhaust heat in the system can be used as the power generation parameter. As shown in Fig. 3, the control unit 11 can acquire the inlet temperature based on the detection results by a temperature sensor 21 that measures an inlet temperature of the exhaust heat recovery unit 20. The exhaust heat recovery unit 20 is affected by the calorific value of the hydrogen-containing fuel and thus changes according to a change in the properties. Here, the fuel cell system 1 may have a combustion catalyst as a countermeasure to incomplete combustion of the off-gas due to misfiring or the like in the off-gas combusting unit 6. In this case, even if the off-gas combusting unit 6 misfires, the calorific value of the hydrogen-containing fuel is reflected on the calorific value of the exhaust gas due to the combustion catalyst. Thus, by using the inlet temperature of the exhaust heat recovery unit 20 as the power generation parameter, the control unit 11 can deal with the change in the properties of the hydrogen-containing fuel even when the off-gas combusting unit 6 misfires.

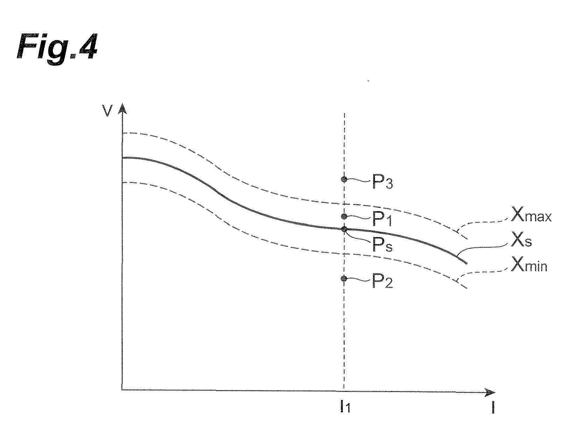

The estimate value acquiring unit 103 of the control unit 11 has a function of acquiring an estimated value of a power generation parameter that is predetermined for an electric current. The estimated value is a value that is predetermined for an electric current under predetermined base conditions. The estimated value is preferably set to such a value that the fuel cell system 1 operates under ideal conditions for the fuel properties, the fuel utilization rate, the fuel supply amount, and the other parameters, for example. The estimated value is a value estimated by an arithmetic process within the control unit 11. For example, the estimated value may be stored in advance in the control unit 11 as a map or a table and may be read at a predetermined point in time, and alternatively, may be calculated by performing predetermined computation. When a stack voltage is used as the power generation parameter, the estimated value follows a graph as indicated by Xₛ in Fig. 4, for example. The estimated value Xₛ shown in Fig. 4 shows a relation between a sweeping current and a stack voltage when the fuel cell system 1 operates under ideal conditions for the fuel properties, the fuel utilization rate, the fuel supply amount, and the other parameters. The estimate value acquiring unit 103 of the control unit 11 may store a plurality of maps or tables of the estimated value according to respective operation conditions (for example, supply amounts or the like of fuel, water, and oxidant) of the fuel cell system 1 and may read an appropriate map or table based on the operation conditions during the control process. When a value other than the stack voltage is used as the power generation parameter, an estimated value that is predetermined for the electric current is used for each power generation parameter.

The comparing and determining unit 104 of the control unit 11 has a function of comparing the power generation state determination value and the estimated value. The comparing and determining unit 104 of the control unit 11 reads an estimated value corresponding to the operation conditions of the fuel cell system 1 and the acquired electric current and compares the estimated value and the power generation state determination value. When the power generation state determination value has increased from the estimated value, the comparing and determining unit 104 of the control unit 11 determines that the calorific value or the amount of generated power per unit hydrogen-containing fuel has increased due to a change in the properties. Moreover, when the power generation state determination value has decreased from the estimated value, the comparing and determining unit 104 of the control unit 11 determines that the calorific value or the amount of generated power per unit hydrogen-containing fuel has decreased due to a change in the properties. The system interrupting unit 105 of the control unit 11 has a function of interrupting the fuel cell system 1 at a predetermined point in time.

The adjusting unit 106 of the control unit 11 has a function of adjusting a supply amount of the hydrogen-containing fuel based on an increase or decrease in the power generation state determination value in relation to the estimated value. When the power generation state determination value has increased from the estimated value, the adjusting unit 106 of the control unit 11 decreases the supply amount of the hydrogen-containing fuel. The adjusting unit 106 of the control unit 11 controls the power generation state determination value so as to approach the estimated value by decreasing the supply amount. The adjusting unit 106 of the control unit 11 outputs a control signal set so as to decrease the supply amount to the hydrogen-containing fuel supply unit 7. When the power generation state determination value has decreased from the estimated value, the adjusting unit 106 of the control unit 11 increases the supply amount of the hydrogen-containing fuel. The adjusting unit 106 of the control unit 11 controls the power generation state determination value so as to approach the estimated value by increasing the supply amount. The adjusting unit 106 of the control unit 11 outputs a control signal set so as to increase the supply amount to the hydrogen-containing fuel supply unit 7. The adjusting unit 106 of the control unit 11 performs subsequent system control using such a control signal in which the supply amount has been increased or decreased. The adjusting unit 106 of the control unit 11 may set a threshold value such as an upper limit or a lower limit of the estimated value and may adjust the supply amount of the hydrogen-containing fuel when the estimated value exceeds the threshold value. Alternatively, the adjusting unit 106 of the control unit 11 may adjust the supply amount whenever the power generation state determination value deviates from the estimated value.

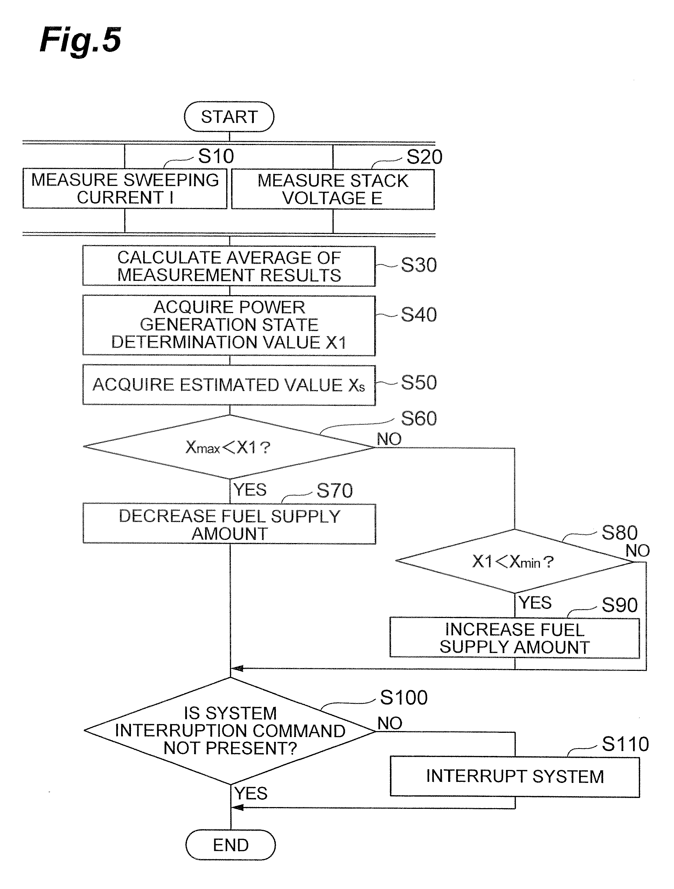

Next, an example of the control process of the fuel cell system 1 according to the present embodiment will be described with reference to Fig. 5. The process shown in Fig. 5 is a process of monitoring a change in the properties of the hydrogen-containing fuel and executing control corresponding to the change in the properties when the properties have changed. In the example shown in Fig. 5, a stack voltage is used as the power generation parameter, and a measured value of the averaged stack voltage is used as the power generation state determination value. The process shown in Fig. 5 is repeatedly executed by the control unit 11 at predetermined points in time.

As shown in Fig. 5, the current acquiring unit 101 of the control unit 11 measures a sweeping current I (step S10), the power generation state determination value acquiring unit 102 measures a stack voltage E (step S20). The current acquiring unit 101 and the power generation state determination value acquiring unit 102 of the control unit 11 perform a process of averaging the sweeping currents I and the stack voltages E measured in steps S 10 and S20 (step S30). Subsequently, the power generation state determination value acquiring unit 102 of the control unit 11 acquires a power generation state determination value X1 (step S40). The power generation state determination value acquiring unit 102 of the control unit 11 acquires a measured value of the stack voltage E averaged in step S30 as the power generation state determination value X1.

Subsequently, the estimate value acquiring unit 103 of the control unit 11 acquires an estimated value Xₛ of the power generation parameter for the sweeping current I (step S50). The estimate value acquiring unit 103 of the control unit 11 acquires an estimated value Xₛ of the stack voltage for the measured value of the sweeping current I averaged in step S30. In the example of Fig. 4, the estimate value acquiring unit 103 of the control unit 11 specifies the stack voltage at a point Pₛ as the estimated value Xₛ for the sweeping current I₁.

Subsequently, the comparing and determining unit 104 of the control unit 11 compares the power generation state determination value X1 and the estimated value Xₛ and adjusts the supply amount of the hydrogen-containing fuel based on the comparison result. Specifically, the comparing and determining unit 104 of the control unit 11 determines whether the power generation state determination value X1 is larger than an upper threshold value Xₘₐₓ set for the estimated value Xₛ (step S60). In the example of Fig. 4, when the power generation state determination value X1 is the stack voltage at the points P₁ and P₂, the comparing and determining unit 104 of the control unit 11 determines that the power generation state determination value X1 is equal to or smaller than the upper threshold value Xₘₐₓ. On the other hand, when the power generation state determination value X1 is the stack voltage at the point P₃, the comparing and determining unit 104 of the control unit 11 determines that the power generation state determination value X1 is larger than the upper threshold value Xₘₐₓ. When it is determined in step S60 that the power generation state determination value X1 is larger than the upper threshold value Xₘₐₓ, the comparing and determining unit 104 of the control unit 11 performs a process of decreasing the supply amount of the hydrogen-containing fuel (step S70). After step S70, the control unit 11 proceeds to a system interruption determination process (step S100).

When it is determined in step S60 that the power generation state determination value X1 is equal to or smaller than the upper threshold value Xₘₐₓ, the comparing and determining unit 104 of the control unit 11 determines whether the power generation state determination value X1 is smaller than a lower threshold value Xₘᵢₙ set for the estimated value Xₛ (step S80). In the example of Fig. 4, when the power generation state determination value X1 is the stack voltage at the points P₁ and P₃, the comparing and determining unit 104 of the control unit 11 determines that the power generation state determination value X1 is equal to or larger than the lower threshold value Xₘᵢₙ. On the other hand, when the power generation state determination value X1 is the stack voltage at the point P₂, the comparing and determining unit 104 of the control unit 11 determines that the power generation state determination value X1 is smaller than the lower threshold value Xₘᵢₙ. When it is determined in step S80 that the power generation state determination value X1 is smaller than the lower threshold value Xₘᵢₙ, the adjusting unit 106 of the control unit 11 performs a process of increasing the supply amount of the hydrogen-containing fuel (step S90). After step S90, the control unit 11 proceeds to a system interruption determination process (step S100). When it is determined in step S80 that the power generation state determination value X1 is equal to or larger than the lower threshold value Xₘᵢₙ, the control unit 11 proceeds to the system interruption determination process (step S100) without adjusting the supply amount of the hydrogen-containing fuel. In the example of Fig. 4, when the power generation state determination value X1 is the stack voltage at the point P₁, the control unit 11 proceeds to step S100 without adjusting the supply amount of the hydrogen-containing fuel.

The comparing and determining unit 104 of the control unit 11 determines whether there is a command for system interruption (step S100). Specifically, the comparing and determining unit 104 of the control unit 11 determines whether there is a system interruption command from the outside or a system interruption command from an interlock device. When it is determined in step S100 that there is a system interruption command, the system interrupting unit 105 of the control unit 11 performs a system interruption process (step S 110) and ends the process shown in Fig. 5. When it is determined in step S100 that there is not the system interruption command, the comparing and determining unit 104 of the control unit 11 ends the process shown in Fig. 5 and starts the processes of steps S10 and S20 at a predetermined point in time.

The control process shown in Fig. 5 may be executed constantly during the operation of the fuel cell system 1 and may be executed periodically in a predetermined period. When the control process is executed constantly, the control unit 11 can monitor the change in the properties when the conditions are changed during the operation by storing a plurality of maps or tables for the estimated value according to the operation conditions of the fuel cell system 1. When the control process is executed periodically, by performing control so that the operation conditions are always constant during the control process, it is possible to decrease the number of maps or tables stored for the estimated value.

In this manner, the fuel cell system 1 compares the power generation state determination value and the estimated value and adjusts the supply amount of the hydrogen-containing fuel based on an increase or decrease of the power generation state determination value in relation to the estimated value. The power generation parameter is affected by a power generation state in the cell stack 5 within the fuel cell system 1. Thus, if other conditions are constant, the change in the power generation state determination value indicates a change in the properties of the hydrogen-containing fuel used in the power generation. The estimated value of the power generation parameter is a value that is predetermined for the electric current and can be used as base data for determining a change in properties. When an electric current and a power generation state determination value are acquired at a predetermined point in time during the operation of the fuel cell system 1, the control unit 11 can specify the estimated value based on the electric current and compare the estimated value and the power generation state determination value. When the power generation state determination value has not changed from the estimated value serving as the base data, it can be determined that there is no change in the properties. On the other hand, when the power generation state determination value has increased or decreased from the estimated value, it can be determined that there is a change in the properties. In this case, the control unit 11 can control the operation state of the fuel cell system 1 so as to approach the state before the properties have changed by adjusting the supply amount of the hydrogen-containing fuel. By doing so, the fuel cell system 1 can continue its operation in an optimum operation state of the fuel cell system 1 as before the properties have changed. By using the power generation parameter that can be measured by the sensors and devices arranged in a general fuel cell system that does not consider a change in the properties of hydrogen-containing fuel, the fuel cell system 1 can deal with the change in the properties without using any special device. In this manner, the fuel cell system 1 can perform an appropriate operation according to a change in the properties of the hydrogen-containing fuel without using any specific device.

### [Second Embodiment]

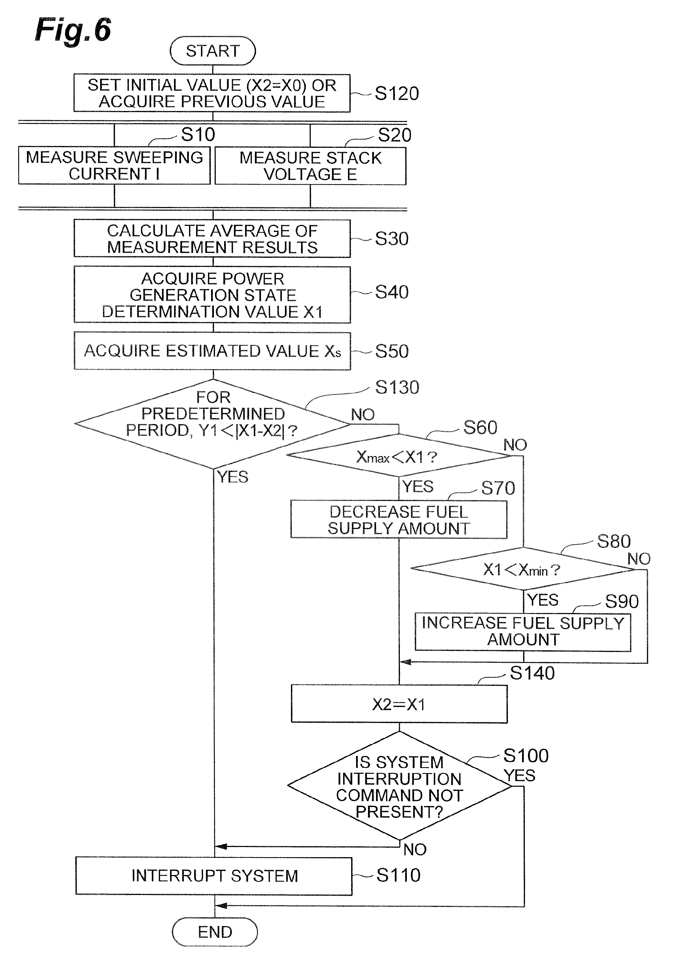

The fuel cell system 1 according to the second embodiment of the present invention will be described with reference to Fig. 6. In the fuel cell system according to the second embodiment, the comparing and determining unit 104 of the control unit 11 has a function of determining whether a state where an variation of the power generation state determination value is larger than a predetermined threshold value has continued for a predetermined period. When the power generation state determination value changes greatly more than the extent that is considered to be caused by the influence of the change in the properties of the hydrogen-containing fuel, and the state has continued for a predetermined period, the comparing and determining unit 104 of the control unit 11 determines that there is an abnormality in the supply of the hydrogen-containing fuel. The system interrupting unit 105 of the control unit 11 has a function of interrupting the system when it is determined that the state where the variation is larger than the threshold value has continued for a predetermined period.

Fig. 6 is a flowchart showing an example of the control process of the fuel cell system 1 according to the second embodiment. First, the power generation state determination value acquiring unit 102 of the control unit 11 acquires a power generation state determination value acquired in the previous control process as a previous value X2 as a value for obtaining an variation of the power generation state determination value (step S120). When the control process is the initial process and there is not a previous value, the initial value X0 is used as the previous value X2. Subsequently, the same processes of steps S10 to S50 as the first embodiment are executed. After step S50, the comparing and determining unit 104 of the control unit 11 determines whether a state where the variation of the power generation state determination value X1 is larger than a threshold value Y1 has continued for a predetermined period (step S130). Here, the variation is an absolute value of the difference between the power generation state determination value X1 and the previous value X2. An optional value may be used as the variation if the value indicates the degree of change in the power generation state determination value X1. For example, a change rate of the power generation state determination value X1 from the previous value X2 may be used.

When it is determined in step S130 that the state where the variation is larger than the threshold value Y1 has continued for the predetermined period, the comparing and determining unit 104 of the control unit 11 determines that there is an abnormality in the supply of the hydrogen-containing fuel, and the system interrupting unit 105 interrupts the system (step S110). After the system is interrupted, the control process shown in Fig. 6 ends.

When it is determined in step S130 that the state where the variation is larger than the threshold value Y1 has not continued for the predetermined period, the comparing and determining unit 104 of the control unit 11 determines that the variation of the power generation state determination value X1 is small, and that no abnormality has occurred in the supply. Alternatively, the comparing and determining unit 104 of the control unit 11 determines that the power generation state determination value X1 just temporarily changed due to fluctuation or the like of the measured value and that no abnormality has occurred in the supply. In this case, the control unit 11 executes the same processes of steps S60 to S90 as the first embodiment. After steps S60 to S90 are executed, the power generation state determination value X1 is set as the previous value X2 (step S 140). The previous value X2 set in this step is used in step S 120 in the subsequent control process. When it is determined that the properties have changed, and the fuel supply amount is adjusted in steps S70 and S90, the control unit 11 may acquire the power generation state determination value X1 after the adjustment again and may set the acquired power generation state determination value X1 as the previous value X2.

After step S140, the control unit 11 executes the same processes of steps S100 and S110 as the first embodiment. When it is determined in step S100 that there is a system interruption command, the control unit 11 performs a system interruption process (step S110) and ends the process shown in Fig. 6. When it is determined in step S100 that there is no system interruption command, the control unit 11 ends the process shown in Fig. 6 and starts the processes of steps S10 and S20 at a predetermined point in time.

### [Third Embodiment]

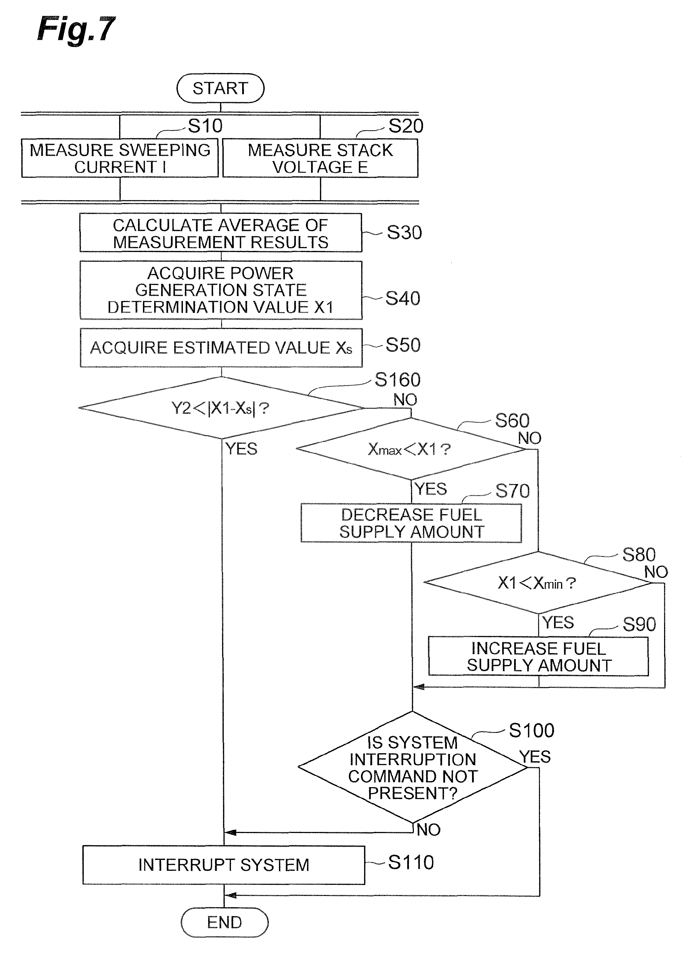

The fuel cell system 1 according to the third embodiment of the present invention will be described with reference to Fig. 7. In the fuel cell system according to the third embodiment, the comparing and determining unit 104 of the control unit 11 has a function of determining whether a variation of the power generation state determination value in relation to the estimated value is larger than a predetermined threshold value. When the power generation state determination value has changed greatly from the estimated value more than the extent that is considered to be caused by the influence of the change in the properties of the hydrogen-containing fuel, the comparing and determining unit 104 of the control unit 11 can immediately determine that there is an abnormality in the supply of the hydrogen-containing fuel. The system interrupting unit 105 of the control unit 11 has a function of interrupting the system when the variation is determined to be larger than the threshold value.

Fig. 7 is a flowchart showing an example of a control process of the fuel cell system 1 according to the third embodiment. First, the control unit 11 executes the same process of steps S10 to S50 as the first embodiment. After step S50, the comparing and determining unit 104 of the control unit 11 determines whether a variation of the power generation state determination value X1 in relation to the estimated value Xₛ is larger than a threshold value Y2 (step S160). Here, the variation is an absolute value of the difference between the power generation state determination value X1 and the estimated value Xₛ. An optional value may be used as the variation if the value indicates the degree of change in the power generation state determination value X1 in relation to the estimated value Xₛ. For example, a change rate of the power generation state determination value X1 from the estimated value Xₛ may be used.

When it is determined in step S130 that the variation is larger than the threshold value Y2, the comparing and determining unit 104 of the control unit 11 determines that there is an abnormality in the supply of the hydrogen-containing fuel and the system interrupting unit 105 interrupts the system (S110). After the system is interrupted, the control process shown in Fig. 7 ends.

When it is determined in step S160 that the variation is equal to or smaller than the threshold value Y2, the comparing and determining unit 104 of the control unit 11 determines that there is no abnormality in the supply. In this case, the control unit 11 executes the same processes of steps S60 to S90 as the first embodiment. After executing steps S60 to S90, the control unit 11 executes the same processes of steps S 100 and S 110 as the first embodiment. When it is determined in step S100 that there is a system interruption command, the control unit 11 performs a system interruption process (step S 110) and ends the process shown in Fig. 7. When it is determined in step S100 that there is no system interruption command, the control unit 11 ends the process shown in Fig. 7 and starts the processes of steps S10 and S20 at a predetermined point in time.

While preferred embodiments of the present invention have been described, the fuel cell system according to the present invention is not limited to the fuel cell system 1 according to the embodiments.

For example, in the examples shown in Figs. 4 to 7, although a case where the stack voltage is used as the power generation parameter has been described, the control process may be performed using other power generation parameters. Moreover, the fuel cell system may perform a combination of the control processes of the second and third embodiments. In this manner, it is possible to monitor abnormality in the supply of the hydrogen-containing fuel more reliably.

### Industrial Applicability

The present invention is applicable to a fuel cell system.

### Reference Signs List

1: fuel cell system
4: hydrogen generating unit
5: cell stack
11: control unit
101: current acquiring unit
102: power generation state determination value acquiring unit
103: estimate value acquiring unit
104: comparing and determining unit (comparing unit, first determining unit, second determining unit)
105: system interrupting unit (first system interrupting unit, second system interrupting unit)
106: adjusting unit (supply amount adjusting unit)

## Claims

1. A fuel cell system comprising:
a hydrogen generating unit that generates hydrogen-containing gas using hydrogen-containing fuel;
a cell stack that performs power generation using the hydrogen-containing gas;
a current acquiring unit that acquires an electric current of the power generation in the cell stack;
a power generation state determination value acquiring unit that acquires a power generation state determination value based on measurement results of a power generation parameter of the power generation in the cell stack;
an estimate value acquiring unit that acquires an estimated value of the power generation parameter that is predetermined for the electric current;
a comparing unit that compares the power generation state determination value and the estimated value; and
a supply amount adjusting unit that adjusts a supply amount of the hydrogen-containing fuel based on an increase or a decrease of the power generation state determination value in relation to the estimated value.

2. The fuel cell system according to claim 1, further comprising:
a first determining unit that determines whether a state where a variation of the power generation state determination value is larger than a predetermined threshold value has continued for a predetermined period; and
a first system interrupting unit that interrupts the system when the first determining unit determines that the state where the variation is larger than the threshold value has continued for the predetermined period.

3. The fuel cell system according to claim 1, further comprising:
a second determining unit that determines whether a variation of the power generation state determination value in relation to the estimated value is larger than a predetermined threshold value; and
a second system interrupting unit that interrupts the system when the second determining unit determines that the variation is larger than the threshold value.

4. The fuel cell system according to any one of claims 1 to 3, wherein
the power generation parameter is a stack voltage of the cell stack.

5. The fuel cell system according to any one of claims 1 to 3, wherein
the power generation parameter is an AC power based on the power generation in the cell stack.

6. The fuel cell system according to any one of claims 1 to 3, wherein
the power generation parameter is an off-gas combustion temperature at which an off-gas from the cell stack has been combusted.

7. The fuel cell system according to any one of claims 1 to 3, wherein
the power generation parameter is a stack temperature of the cell stack.

8. The fuel cell system according to any one of claims 1 to 3, wherein
the power generation parameter is an exhaust heat recovery calorific value which is an amount of recovered exhaust heat in the system.

9. The fuel cell system according to any one of claims 1 to 3, wherein
the power generation parameter is an inlet temperature of an exhaust heat recovery unit that recovers exhaust heat in the system.
